# EUROPEAN PATENT APPLICATION

(11) **EP 1 139 133 A2**
(43) Date of publication of application: **04.10.2001**
(21) Application number: 01302683.6
(22) Date of filing: 22.03.2001
(51) Int. Cl.: G02B 6/42, G02B 6/38

(54) **Optical fiber array ferrule and optical fiber array**

(30) Priority: 27.03.2000 JP 2000086193; 09.02.2001 JP 2001034516
(71) Applicant: NGK INSULATORS, LTD., Nagoya-City, Aichi Prefecture 467-8530 (JP)
(72) Inventor: Matsumoto, Akira, Nagoya-shi, Aichi-ken 467-8530 (JP); Fukuyama, Masashi, Nagoya-shi, Aichi-ken 467-8530 (JP)
(74) Representative: Paget, Hugh Charles Edward

(57) **Abstract**

An optical fiber array ferrule comprises an optical fiber clamp section 3 having three blocks of V grooves 5, each block having two V grooves 5, for holding groups of the stripped end portions 2a of optical fibers 2 in lateral pitch and a sheathed portion clamp section 4a for clamping the sheathed portions 2b of the optical fibers. The sheathed portion clamp section 4a incorporates an upper base 8 which has grooves 9 provided therein corresponding to the blocks of the stripped end portions 2a so that the center line of each groove 9 is aligned with that of each block. Even when the V groove pitch is different from the pitch of sheathed portions of optical fibers, significant streee in the optical fibers can be avoided.

## Description

### Back Ground of the Invention

### Field of the Invention

The present invention relates to an optical fiber array ferrule for use in aligning and clamping a group of optical fibers when they are connected to an optical element and also an optical fiber array provided with the ferrule.

### Description of the Related Art

One of such conventional optical fiber array ferrules for connecting a plurality of optical fibers to an optical element is disclosed in Japanese Patent No, 2,824,177. The arrangement comprises, as shown in Fig. 4, a V groove base 20 having v grooves 21 formed therein for positioning and holding the stripped portions of optical fibers 25, an upper base 22 for clamping the sheathed portions of the optical fibers to the V groove base 20, and a fiber clamp base 23 for clamping the stripped portions of the optical fibers held in the V grooves 21. The upper base 22 has recesses 24 provided therein for inhibiting the movement of the sheathed portions of the optical fibers. The recesses 24 are arranged of a V shape in cross section or in the form of a rectangular groove as illustrated.

As the upper base 22 is designed for inhibiting the movement of the sheathed portions of the optical fibers 25, aligned adjacent with a constant pitch the optical fibers 25 can securely be aligned and clamped with the lateral pitch of the V grooves 21 identical to that of the sheathed portions of the optical fiber. However, the optical device to be connected with the optical fibers, such as an optical waveguide, a light emitting element, or a light receiving element, is not always equal in the pitch to the sheathed portions of the optical fibers. In such case, the pitch of the stripped portions of the optical fibers 25 or the V grooves 21 has to be determined depending on the pitch of the optical element. In other words, the pitch of the sheathed portions of the optical fiber may often be different from that of the V grooves.

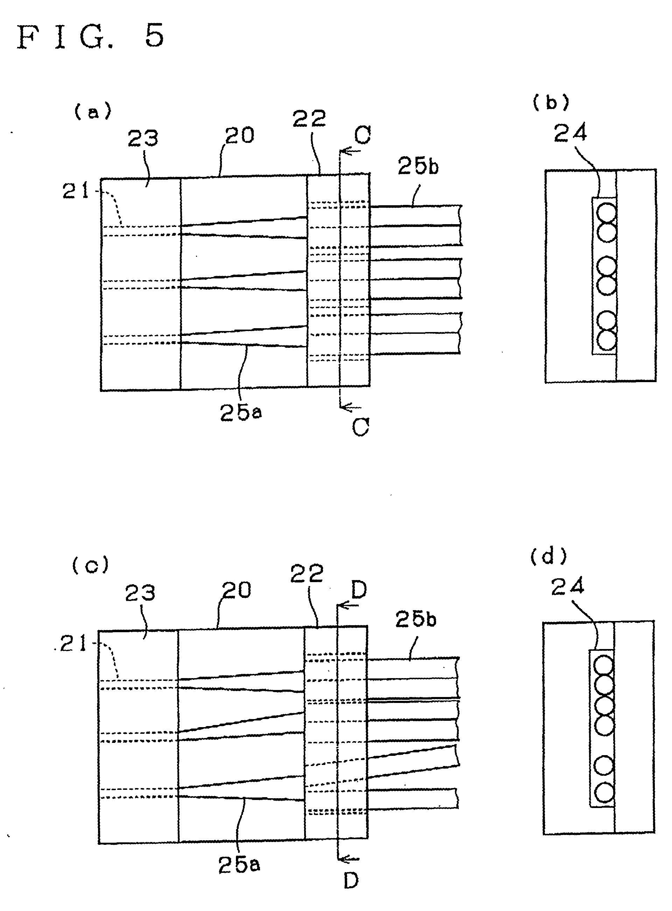

When the pitch of the V grooves (the pitch of the stripped portions of the optical fibers) is smaller than the diameter of the sheathed portions 25b as shown in Fig. 5, the pitch of the optical fiber is restricted by the sheathed portion 256. Therefore stripped end portions 25a of the optical fibers in the conventional arrangement can be accommodated in the V grooves 21 only after deflection. It is assumed that the recess 24 is in the form of a single groove of a rectangular shape in the cross section.

Accordingly, a group of the optical fibers designated to be aligned equally as shown in Fig. 5a may be dislocated thus causing their stripped portions 25a to extend at different angles as shown in Fig. 5c. This will develop stresses urged in bias on the optical fibers and generate a difference in the optical properties or stresses between the optical fibers. Particularly, with the optical fibers designed for polarized wave light, the difference in the optical properties will be emphasized by the effect of a polarized wave crosstalk.

### Summary of the Invention

It is thus an object of the present invention, in view of the above aspects, to provide an optical fiber array ferrule which can inhibit the optical fibers from being significantly stressed in bias when the pitch of the stripped portions of the optical fiber or of the V grooves is different from that of the sheathed portions of the optical fibers and also to provide an optical fiber array provided with the ferrule.

An optical fiber array ferrule according to claim 1 of the present invention is provided comprising an optical fiber clamp section for clamping a group of the stripped end portions of optical fibers in optical fiber holding grooves formed therein and a sheathed portion clamp section for clamping the sheathed portions of the optical fibers of which the lateral pitch is different from that of the optical fiber clamp section, said sheathed portion clamp section including a sheathed portion holding base which has grooves provided therein for adjustably determining the lateral pitch of the sheathed portions of the optical fibers.

According to claim 2 of the present invention, the optical fiber array ferrule defined in claim 1 is modified in which the optical fiber holding grooves are formed as groups in blocks and the grooves provided in the sheathed portion holding base are arranged corresponding to the number of the blocks so that the center line of the groove is aligned with that of each block of the optical fiber holding grooves .

According to claim 3 of the present invention, an optical fiber array is provided having the stripped end portions and the sheathed portions of optical fiber accommodated and held in the optical fiber array ferrule defined in claim 1 or 2.

According to claim 4 of the present invention, the optical fiber array defined in claim 3 is modified in which the optical fiber is a fiber optic for polarized wave light.

### Brief Description of the Drawings

Fig. 1 illustrates one example of an optical fiber array according to the present invention, in which Fig. 1a is a plan view, Fig. 1b is a cross sectional view taken along the line A-A, and Fig. 1c is a side view of the same;
Fig. 2 is a view showing the right end of a base shown in Fig. 1;
Fig. 3 illustrates another embodiment of the present invention, in which Fig. 3a is a plan view and Fig. 3b is a cross sectional view taken along the line B-B;
Fig. 4 is a perspective view of a conventional optical fiber array ferrule; and
Fig. 5 illustrates a conventional optical fiber array where the sheathed portions of optical fiber are different in the pitch from the V grooves, in which Fig. 5a is a plan view, Fig. 5b is a cross section view taken along the line C-C, Fig. 5c is a plan view, and Fig. 5d is a cross sectional view taken along the line D-D.

### Detailed Description of the Preferred Embodiments

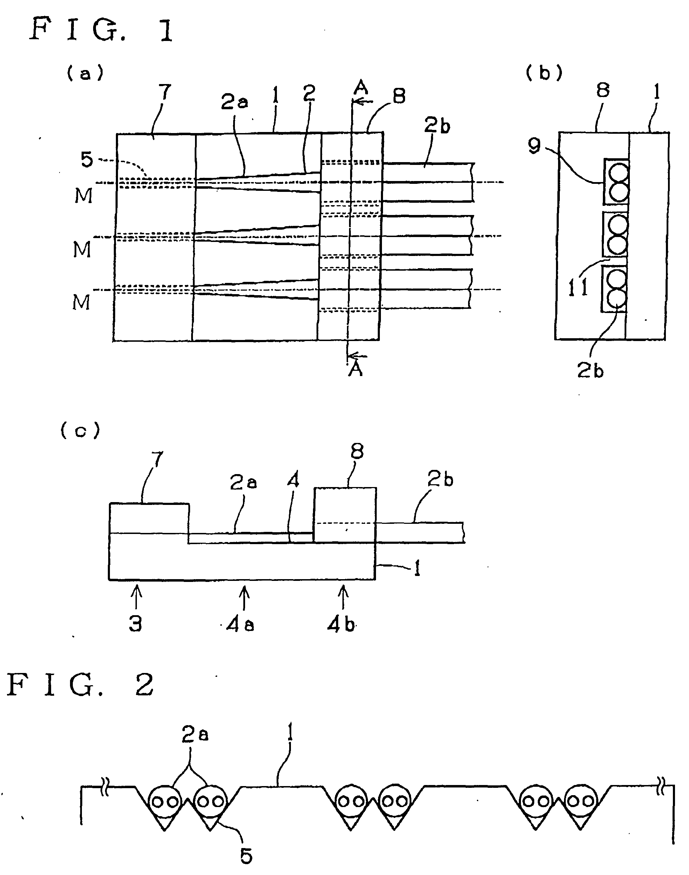

Some embodiments of the present invention will be described in more detail referring to the relevant drawings. Fig. 1 illustrates an optical fiber array according to the present invention where Figs. 1a, 1b, and 1c are a plan view, a cross sectional view taken along the line A-A, and a side view of the same. As shown, denoted by 1 is a base for an optical fiber array ferrule having a connector face provided at the left side of the drawing for connecting with an optical element. Also, optical fibers 2 are provided having optical fiber stripped portions 2a and optical fiber sheathed portions 2b.

The base 1 comprises an optical fiber clamp section 3 for clamping the optical fiber stripped portion 2a, a sheathed portion clamp section 4a for clamping the optical fiber sheathed portion 2b, and a fiber angled section 4b provided as a space for bending the optical fibers. The optical fiber clamp section 3 includes three blocks of paired V grooves 5, each block consisting of a pair of (holding) V grooves 5 arranged of a V-shape in cross section for accepting two of the distal ends of the optical fiber stripped end portions 2a aligned to match the lateral pitch of the optical element to be joined and extending at a right angle to the end face of the base 1 as shown in the enlarged end view of the base 1 of Fig. 2. More specifically, the optical fibers are placed in the V grooves 5 respectively and then clamped at their stripped portions 2a by a fiber clamping plate 7 of a flat shape adhesively placed on the base 1 The V groove 5 of each pair is sized smaller than the diameter or the lateral pitch of the optical fiber sheathed portions 2b.

The sheathed portion clamp section 4a and the fiber angled section 4b are provided on a lower right planar surface 4 of the base 1 which is stepped down from the optical fiber clamp section 3 of the base 1. Formed is the fiber angled section 4b at the center and the sheathed portion clamp section 4a at the right.

The sheathed portion .clamp section 4a incorporates an upper base 8 (a sheathed portion holder) mounted directly on the base 1 to cover the optical fiber sheathed portions 2b from above. The upper base 8 has three grooves 9 of a rectangular shape in cross section provided in a base facing side thereunder. The groove 9 like the V groove 5 is shaped so as to accept an array of the two optical fibers designated as a block. The groove 9 is sized in the cross section to match the pitch of the V groove 5 so that the center line of each block is aligned with the center line M of the v groove pair.

The base 1, the fiber clamping plate 7, and the upper base 8 may be made of a ceramic or glass material which is lower in the thermal expansion. If the width of a partition 11 between any two groove 9 in the upper base 8 is not greater than 0.3 mm, the probability of accidental breakage will increase. For compensation, the three grooves 9 may be provided side by side with using no partitions.

Even when pitch of the paired V grooves 5 or of the optical fiber stripped portions 2a is smaller than the pitch of the optical fiber array with adjacent the optical fiber sheathed portions 2b. Accordingly, and any of the optical fibers 2 is misaligned during the clamping of the optical fibers 2 to the base 1, their arraying angles remain same. Hence, the optical fiber can be free from any significant stress. In case that the optical fibers are of a type for transmission of polarized wave light, they can receive uniform levels of stress. As a result, the optical fiber array will be minimized in the characteristic discrepancy and improved in the optical properties.

Particularly, it is essential for the optical fibers for polarized wave light to set the angle of polarization to a desired degree, hence requiring a troublesome action of fiber rotation adjustment. With a conventional arrangement of the ferrule, the sheathed portions can hardly be rotated coaxially but may be dislocated to the left or right while being rotated. This possibly makes the operation difficult and eventually results in misalignment of the optical fiber as shown in Fig. 5c. With the arrangement of this embodiment, the rotation can be carried out substantially in coaxial relationship and the overall operation will be facilitated. As the sheathed portions are securely held at their positions, no significant misalignment will be permitted.

The uniformity of the stress characteristics may be most distinct when a pair of the optical fibers constitute 8 a block. When one block is implemented by three or more optical fibers, its arraying angle can remain minimum consistently. As any conventional unwanted event of biasing in the stress which may result in a single optical fiber being stressed intensively is minimized, this embodiment will be effective. Also, if the pitch for clamping the optical fiber is different from that of the sheathed portions, the optical fibers may extend at an angle therebetween. For minimizing or easing the angle, a free interference section may be provided between the V grooves section and the sheathed portion clamping section. The free interference section for regarding the optical properties and the operational reliability may preferably be sized so that the radius is not smaller than 30 mm. One of its best examples of shapes are disclosed in Japanese Patent Laid-open Publication (Heisei) 11-242127.

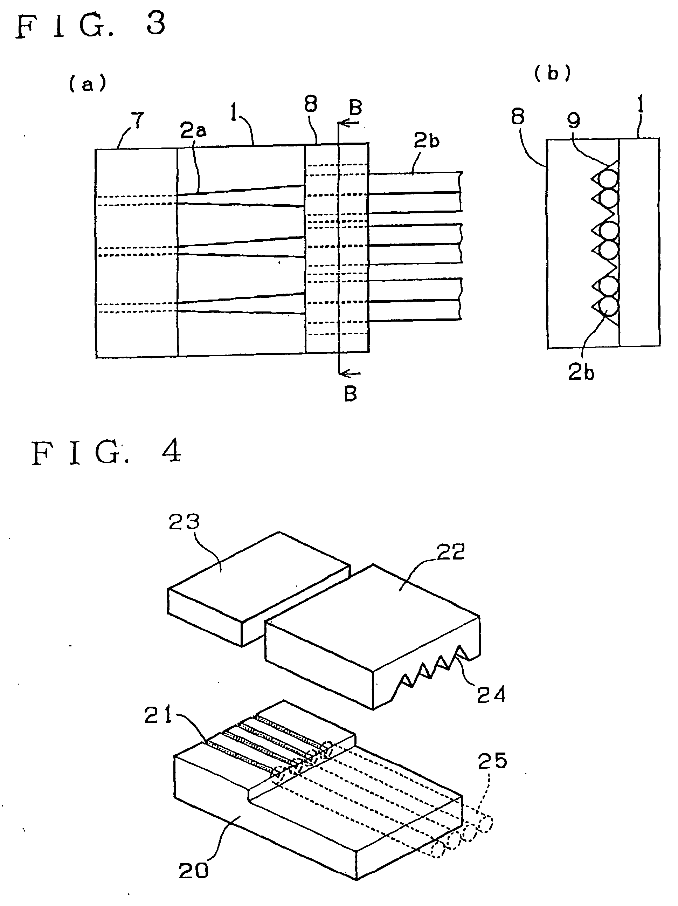

Fig. 3 illustrates another embodiment of the present invention where the grooves 9 provided in the upper base 8 shown in Fig. 1 are modified in the shape. The groove 9 has a W shape in the cross section for matching the pitch of the optical fiber sheathed portions 2b. When the partition 11 with the shape of the grooves 9 shown in Fig. 1 is not greater than 0.3 mm in the width, the groove shape of this embodiment is preferably used. When the number of blocks is increased with the width of each groove becoming greater, the arrangement shown in Fig. 1 optimizing the function of the partitions is better than that shown in Fig. 3 where no partitions between any two blocks exist and permit the upper base 8 has less contact areas with the base 1 and thus is deflected when stressed.

It would be understood that the present invention is also applicable to the pitch of the V grooves greater than the pitch of the sheathed portions but not limited to the pitch of the V grooves smaller than the pitch of the sheathed portions as described.

### Advantage of the Invention

As set forth above, according to the feature of the present invention defined in claims 1 to 3, even when the sheathed portions of optical fiber are different in the pitch from the stripped portions, the optical fibers can extend at an equal angle thus inhibiting any particular one of them from being stressed intensively.

As the feature of the present invention defined in claim 4 is preferably applied to optical fibers for polarized wave light which are highly susceptible to stress, its embodied optical fiber array can exhibit favorable levels of the optical properties while minimizing discrepancies of each polarized wave light optical fiber.

## Claims

1. An optical fiber array ferrule comprising an optical fiber clamp section for holding and clamping a group of the stripped end portions of optical fibers in optical fiber holding grooves formed therein and a sheathed portion clamp section for clamping the sheathed portions of the optical fibers of which the lateral pitch is different from that of the optical fiber clamp section, said sheathed portion clamp section including a sheathed portion holding base which has grooves provided therein for adjustably determining the lateral pitch of the sheathed portions of the optical fibers.

2. An optical fiber array ferrule according to claim 1, wherein the optical fiber holding grooves are formed as groups in blocks and the grooves provided in the sheathed portion holding base are arranged corresponding to the number of the blocks so that their center line is aligned with that of each block of the optical fiber holding grooves.

3. An optical fiber array having the stripped end portions and the sheathed portions of optical fiber accommodated and held in the optical fiber array ferrule defined in claim 1 or 2.

4. An optical fiber array according to claim 3, wherein the optical fiber is a fiber optic for polarized wave light.
